# EUROPÄISCHE PATENTSCHRIFT

(11) **EP 3 042 559 B1**
(45) Veröffentlichungstag und Bekanntmachung des Hinweises auf die Patenterteilung: **27.11.2019**
(21) Anmeldenummer: 15150609.4
(22) Anmeldetag: 09.01.2015
(51) Int. Cl.: A01K 51/00

(54) **VORRICHTUNG ZUR BEKÄMPFUNG DER VARROAMILBE IN EINER BIENENBRUT**
DEVICE FOR COUNTERING THE VARROA MITE IN A BEE BROOD
DISPOSITIF DESTINÉ À LUTTER CONTRE LA VARROASE DANS UN COUVAIN

(43) Veröffentlichungstag der Anmeldung: 13.07.2016
(73) Patentinhaber: Vatorex AG, 8542 Wiesendangen (CH)
(72) Erfinder: BRUNNER, Willi, 8542 Wiesendangen (CH)
(74) Vertreter: Albrecht, Ralf

(56) Entgegenhaltungen:
- WO-A1-02/43475
- WO-A1-2015/087197
- WO-A2-2012/114136
- DE-A1- 19 834 345
- US-A1- 2012 202 403

## Beschreibung

Die Erfindung betrifft eine Vorrichtung zur Bekämpfung der Varroamilbe in einer Bienenbrut, mit zumindest einer insbesondere in einen Bienenkasten einsetzbaren Mittelwand, die mit vorgeprägten Brutzellen für weibliche Bienen versehen ist.

Bienenvölker werden von Imkern gewöhnlich in Bienenkästen, auch Brutkästen genannt, gehalten und dienen dort der Honigerzeugung. Die Bienenkästen haben regelmäßig eine Quaderform. In die Bienenkästen eingesetzt sind nebeneinander hängend rechteckige Mittelwände, die von Rähmchen umgeben sind, mittels denen sie in den Bienenkästen herausnehmbar eingesetzt sind. Dabei ist unter dem Begriff "Mittelwand" im Sinne der vorliegenden Beschreibung und Ansprüche eine Wandung beliebigen Umrisses zu verstehen, die - anders als die Mittelwände der Vorrichtung nach der nicht vorveröffentlichten WO 2015/087197 A1 - auf einer oder auf beiden Seiten mit vorgeprägten Brutzellen versehen sind, und zwar unabhängig davon, ob die Mittelwand von einem Rähmchen umgeben ist oder nicht.

Die Mittelwände sind meistenfalls als gewalzte oder gegossene Platten aus Bienenwachs ausgebildet, in den die Brutzellen in Form von gleichseitigen Sechsecken eingeprägt sind, die jeweils Bienenwaben bilden. Nach dem Einhängen der Mittelwände in das Bienenvolk greifen die Bienen das Bienenwabenmuster auf und bauen die vorgeformten Brutzellen mit Hilfe des von ihnen erzeugten Bienenwachses zu einer Brutwabe aus.

Bei den Mittelwänden wird unterschieden zwischen Mittelwänden mit Brutzellen für weibliche Bienen, den sogenannten Arbeiterinnenzellen, und Brutzellen für männliche Bienen, den sogenannten Drohnenzellen. Letztere sind im Durchmesser und in der Tiefe deutlich größer als die Arbeiterinnenzellen.

Seit einer Reihe von Jahren sind die Imker mit einer drastischen Zunahme der Sterblichkeit der Bienenvölker konfrontiert, insbesondere der Winterbienenvölker. Für die hohe Sterblichkeit werden hauptsächlich bienenschädliche Milben verantwortlich gemacht, insbesondere die Varroamilbe. Zur Bekämpfung der Varroamilbe sind grundsätzlich zwei Wege eingeschlagen worden, nämlich zum einen die chemische Behandlung zum Beispiel mittels organischer Säuren und zum anderen die thermische Behandlung. Die chemische Behandlung hat den Nachteil, dass die Gefahr besteht, dass Rückstände des Behandlungsmittels in den Honig gelangen. Diese Gefahr ist bei der rein thermischen Behandlung nicht gegeben.

Für die thermische Behandlung sind besondere Wärmeschränke entwickelt worden, in denen die Brutwaben einer Warmluftströmung über mehrere Stunden ausgesetzt werden. Hierzu werden die mit Varroamilben befallenen Brutwaben aus dem Bienenkasten herausgenommen und die darauf sitzenden Bienen abgeschüttelt oder abgestreift. Die bienenfreien Brutwaben werden anschließend in den Wärmeschrank eingehängt. Dann wird die Temperatur des Wärmeluftstroms langsam erhöht, bis in den Brutzellen eine Temperatur zwischen 39 und 42°C erreicht ist. Diese Temperatur wird dann über mehrere Stunden gehalten (WO 92/14355 A1 und EP 2 250 880 B1).

Die Behandlung mittels separatem Wärmeschrank ist wegen des notwendigen Verbringens der Brutwaben in den Wärmeschrank und zurück in den Bienenkasten sehr zeitaufwändig. Außerdem stellt die Beschaffung des Wärmeschrankes eine erhebliche, für Hobbyimker kaum rentable Investition dar. Wegen der einfacheren Handhabung und der geringeren Kosten setzen deshalb viele Imker nach wie vor auf die chemische Bekämpfung.

Als Alternative zur Warmluftbehandlung in separaten Wärmeschränken ist der Vorschlag gemacht worden, die Varroamilbe dadurch zu bekämpfen, dass eine Mittelwand oder mehrere Mittelwände mit Brutzellen für die Drohnen mit einer Heizeinrichtung versehen werden, die ein in die Mittelwand eingelassenes Widerstandsheizelement und eine damit verbundene Steuereinrichtung aufweist (vgl. US 8,272,921 B1). Die so ausgestattete Mittelwand bzw. die so ausgestatteten Mittelwände werden in den Brutkasten eingesetzt und von den Bienen zu einer Drohnenbrutwabe bzw. Drohnenbrutwaben ausgebaut. Während der Entwicklung der Drohnenlarven zu adulten Drohnen kann die Heizeinrichtung zwecks Beheizung der Drohnenbrutwabe bzw. der Drohnenbrutwaben eingeschaltet werden. Dies bewirkt in wenigen Minuten eine Aufheizung der Drohnenbrutwabe(n) auf ungefähr 65°C. Nach ebenso wenigen Minuten wird die Heizeinrichtung wieder abgeschaltet. Diese starke Aufheizung bewirkt ein Absterben sowohl der Varroamilben als auch der Drohnenbrut.

In der WO 02/043475 A1 ist ebenfalls eine Vorrichtung offenbart, bei der eine Mittelwand oder mehrere Mittelwände mit Brutzellen für die Drohnen mit einer Heizeinrichtung versehen sind. Im Unterschied zu der Vorrichtung gemäß der US 8,272,921 B1 werden die Drohnenbrutwaben auf zumindest 44°C erhitzt, um die Varroamilbe zu bekämpfen.

Diese Systeme haben zwar den Vorteil, dass kein besonderer Wärmeschrank mit für dessen Benutzung notwendigen Handhabungen erforderlich ist. Von Nachteil ist jedoch, dass die Wirksamkeit unbefriedigend ist, da die Varroamilbenbekämpfung auf die für Drohnen ausgebildete Drohnenbrutwabe beschränkt ist und demgemäß die für die Bienenvolkpopulation wesentlich wichtigeren Brutzellen für die Arbeiterinnen unbehandelt und damit ungeschützt bleiben. Hinzu kommt, dass Brutwaben für Drohnenbrut nur während der relativ kurzen Brutzeit für Drohnen einem Varroamilbenbefall unterliegen und deshalb nur während dieser Zeit eine Bekämpfung der Varroamilbe möglich ist.

Der Erfindung liegt die Aufgabe zugrunde, eine Vorrichtung zur Bekämpfung der Varroamilbe in einer Bienenbrut bereitzustellen, die einfach zu handhaben ist und einen wesentlich besseren Schutz des Bienenvolkes vor bienenschädlichen Milben über die gesamte Trachtperiode ermöglicht.

Diese Aufgabe wird erfindungsgemäß bei einer Vorrichtung der eingangs genannten Art dadurch gelöst, dass eine elektrische Heizeinrichtung vorgesehen ist, die ein in die Mittelwand mit vorgeprägten Brutzellen für weibliche Bienen eingelassenes Widerstandsheizelement und eine damit verbundene Steuereinrichtung aufweist, wobei die Steuereinrichtung derart ausgebildet ist, dass ein automatisch ablaufender Heizvorgang mit einer zeitlich vorbestimmten Aufheizphase bis zum Erreichen einer Temperatur von 39°C bis 45°C, vorzugsweise 39°C bis 42°C, in den Böden der Brutzellen im Bereich des Widerstandsheizelementes und dann mit einer sich daran anschließenden Haltephase auf dieser Temperatur über eine vorbestimmte Zeit initiierbar ist, gemäß dem unabhängigen Anspruch 1.

Grundgedanke der Erfindung ist es somit, eine Vorrichtung mit zumindest einer Mittelwand mit Brutzellen für weibliche Bienen bereitzustellen, die nach dem Einsetzen in den Bienenkasten elektrisch beheizt werden kann, und zwar in der Weise, dass dabei nur die Varroamilben abgetötet werden, während die Bienen und Bienenlarven in diesem Bereich unbehelligt bleiben. Deshalb erfolgt die Beheizung - anders als bei der Vorrichtung nach der US 8,272,921 B2 - auch nur auf eine ausschließlich für die Varroamilbe schädlichen Temperatur. Es hat sich herausgestellt, dass damit eine außerordentlich effektive Bekämpfung der Varroamilbe möglich ist, da der Heizvorgang dort stattfindet, wo die Varroamilbe besonders schädlich wirkt. Zur Initiierung des Heizvorgangs ist eine Entnahme der Brutwabe aus dem Bienenkasten nicht erforderlich, d.h. bevorzugt erfolgt die Initiierung des Heizvorgangs im Bienenkasten selbst, so dass eine Handhabung der Brutwabe bzw. der Brutwaben nicht erforderlich ist.

Bei der Anwendung des Grundgedankens der Erfindung ist es nicht ausgeschlossen, zusätzlich zumindest eine, vorzugsweise sämtliche Mittelwände mit Brutzellen für Drohnen mit der erfindungsgemäßen Heizeinrichtung zu versehen und diese Mittelwände nach dem Einsetzen in den Bienenkasten und während der Brutperiode ebenfalls dem erfindungsgemäßen Heizvorgang zu unterwerfen, um auch in diesem Bereich eine Bekämpfung der Varroamilbe vorzunehmen. Für den Schutz der Arbeiterinnen ist diese zusätzliche Maßnahme jedoch nicht erforderlich, zumal der Varroamilbenbefall im Bereich der Brutzellen für die Drohnen kaum Schaden verursacht.

Das Widerstandsheizelement kann beliebige Formgebung und Erstreckung haben. Zweckmäßigerweise sollte es sich nicht über die ganze Fläche der Mittelwand erstrecken, vielmehr auf eine zentrale Fläche beschränkt sein. Sie sollte mindestens 80% der Brutfläche umfassen. Die obere Futterzone und die seitlichen Zellen für Pollenvorräte und gegebenenfalls leere, untenseitige Restzellen kann von dem Widerstandsheizelement freigehalten werden.

Die Aufheizphase sollte keinesfalls so schnell vor sich gehen, wie bei der Vorrichtung gemäß der US 8,272,921 B1. Damit sich die Brutzellen gleichmäßig erwärmen und die Bienenbrut vor schnellen Temperatursprüngen geschützt wird, sollte sich die Aufheizphase über mindestens 30 Minuten, insbesondere über mindestens 1 Stunde erstrecken. Das Aufheizen sollte gleichmäßig mit einer bestimmten Rate, vorzugsweise höchstens 0,1 °C/min erfolgen. Auch die Haltephase sollte deutlich länger sein als bei der Vorrichtung nach der US 8,272,921 B2, nämlich mindestens 30 Minuten, insbesondere mindestens 1 Stunde, vorzugsweise mindestens 1,5 Stunden, insbesondere 2 Stunden betragen. Sie kann auch deutlich länger sein. Letztlich bestimmt sich die Länge der Haltephase nach dem Ziel, einerseits die in den Brutzellen der Brutwaben befindlichen Varroamilben abzutöten, andererseits aber nicht überflüssig Strom zu verbrauchen.

Die Steuereinrichtung kann so ausgebildet sein, dass die zeitlichen Erstreckungen der Halte- und der Aufheizphase in der Steuereinrichtung fixiert sind. Die Steuereinrichtung kann jedoch auch so ausgebildet sein, dass der Nutzer der erfindungsgemäßen Vorrichtung die zeitlichen Erstreckungen verstellen und damit an die jeweilige Situation, in der der Bienenkasten aufgestellt ist, angepasst werden kann.

Nach einem weiteren Merkmal der Erfindung ist vorgesehen, dass die Steuereinrichtung derart ausgebildet ist, dass nach Initiierung eines ersten Heizvorganges automatisch zumindest ein weiterer Heizvorgang bewirkt wird. Die Intervalle zwischen zwei aufeinanderfolgenden Heizvorgängen kann an die Intensität des Befalls an Varroamilben angepasst werden. Während der Brutperiode von März bis September können Heizvorgänge in Wochenabständen, beispielsweise alle drei Wochen, initiiert werden, wobei die Steuereinrichtung dies automatisch vornimmt. Auch andere, beispielsweise größere Intervalle können vorgesehen sein. Dabei besteht die Möglichkeit, die Intervalle in der Steuereinrichtung fix einzustellen. Zweckmäßigerweise weist die Steuereinrichtung aber eine Einstellmöglichkeit für den Imker auf, so dass der Imker die zeitliche Erstreckung der Intervalle selbst bestimmen kann, vorzugsweise innerhalb vernünftiger, durch Erfahrung gewonnener Grenzen. Wichtig ist es, dass der Imker von der Beobachtung und Betätigung der Vorrichtung dadurch entlastet wird, dass die einzelnen Heizvorgänge durch die Steuereinrichtung selbst ohne Zu- oder Eingriff des Imkers initiiert werden.

Ein besonders vorteilhaftes Merkmal der Erfindung besteht darin, dass das Widerstandsheizelement als Kaltleiter (PTC-Widerstand oder -Thermistor) ausgebildet ist. Charakteristisch für solche Kaltleiter ist, dass der elektrische Widerstand in etwa linear mit der Temperatur ansteigt. Dies eröffnet die Möglichkeit, die Steuerung der Temperatur in der Aufheizphase und in der Haltephase durch Anpassung der jeweils gemessenen Werte für Strom und Spannung im Kaltleiter an in der Steuereinrichtung hinterlegte Werte vorzunehmen. Diese Art der Steuereinrichtung ist konstruktiv elegant und erübrigt die Installation eines Temperatursensors in der angeschlossenen Mittelwand.

In besonders bevorzugter Ausgestaltung hat die Vorrichtung mehrere Mittelwände mit darin eingelagerten Widerstandsheizelementen, die sämtlich mit der Steuereinrichtung verbunden sind, über die dann jeweils ein Heizvorgang in jedem der Mittelwände initiierbar ist. Vorzugsweise sind dies - wie schon oben erwähnt - sämtliche Mittelwände mit Brutzellen für weibliche Bienen. Dabei können die Mittelwände Gruppen von jeweils mehreren Mittelwänden bilden, wobei jede Gruppe für den Einsatz in jeweils einem Bienenkasten bestimmt ist. Die erfindungsgemäße Vorrichtung ist deshalb auch für die Bekämpfung der Varroamilbe in mehreren Bienenkästen eines Bienenstandes geeignet, wobei die Steuerung der Heizvorgänge in den zu Brutwaben ausgebauten Mittelwänden zentral von einer einzigen Steuereinrichtung erfolgt. Dabei können - wie ebenfalls schon oben erwähnt - auch die für die Drohnenbrut vorgesehenen Brutwaben mit einbezogen werden, indem auch diese jeweils einem erfindungsgemäßen Heizvorgang ausgesetzt werden.

Bei der vorbeschriebenen Ausgestaltung der erfindungsgemäßen Vorrichtung sollte die Steuereinrichtung derart ausgebildet sein, dass die Heizvorgänge für die einzelnen Brutwaben nacheinander durchgeführt werden. Hierdurch wird eine zu hohe Wärmebeaufschlagung innerhalb eines Bienenkastens und auch eine zu hohe Stromaufnahme vermieden, die entstehen würde, wenn die Heizvorgänge parallel abliefen. Die einzelnen Heizvorgänge sollten sich unmittelbar aneinander anschließen. Dies ist jedoch nicht zwingend, d.h. es können zwecks noch weiterer Reduzierung der Wärmebelastung des Bienenkastens auch zeitliche Abstände zwischen zwei Heizvorgängen benachbarter Mittelwände bzw. Brutwaben vorgesehen sein. Nach Abschluss der Heizvorgänge für sämtliche Brutwaben kann auch insoweit eine Wiederholung dieser Heizvorgänge vorgesehen sein, und zwar entweder in vorbestimmten oder einstellbar vorbestimmbaren zeitlichen Abständen. Solche Intervalle können - wie schon oben erwähnt - mehrere Wochen innerhalb einer Brutperiode betragen.

Die Ausbildung der Steuereinrichtung kann auf verschiedenste Weise erweitert werden, um die Kontrolle des Imkers über die von der Steuereinrichtung initiierten Heizvorgänge zu erleichtern. So kann das Datum und die Uhrzeit jedes Heizvorganges für jede Mittelwand bzw. Brutwabe gespeichert und dann für den Imker abrufbar gestaltet werden. Gleiches gilt für eventuelle Störungen, die dem Imker durch optische oder akustische Warnelemente angezeigt werden können. Solche Störungen können bei der Energieversorgung oder bei ungenügender Stromversorgung der Widerstandsheizelemente auftreten. Dies alles kann protokolliert und in einem Display angezeigt werden. Letztlich besteht das Gesamtziel darin, die Steuereinrichtung so auszubilden, dass einerseits der Imker von eigenen Handlungen weitestgehend entlastet wird, andererseits aber er jederzeit die Funktion der erfindungsgemäßen Vorrichtung kontrollieren und abfragen kann und zudem über Fehlfunktionen unterrichtet wird.

In der Zeichnung ist die Erfindung anhand eines Ausführungsbeispiels näher veranschaulicht. Es zeigen:
- Figur 1: zwei Bienenkästen mit der erfindungsgemäßen Vorrichtung zur Bekämpfung von Varroamilben in perspektivischer Darstellung;
- Figur 2: einen Vertikalschnitt durch eine Mittelwand für die Bienenkästen gemäß Figur 1, und
- Figur 3: eine Seitenansicht der Mittelwand gemäß Figur 2.

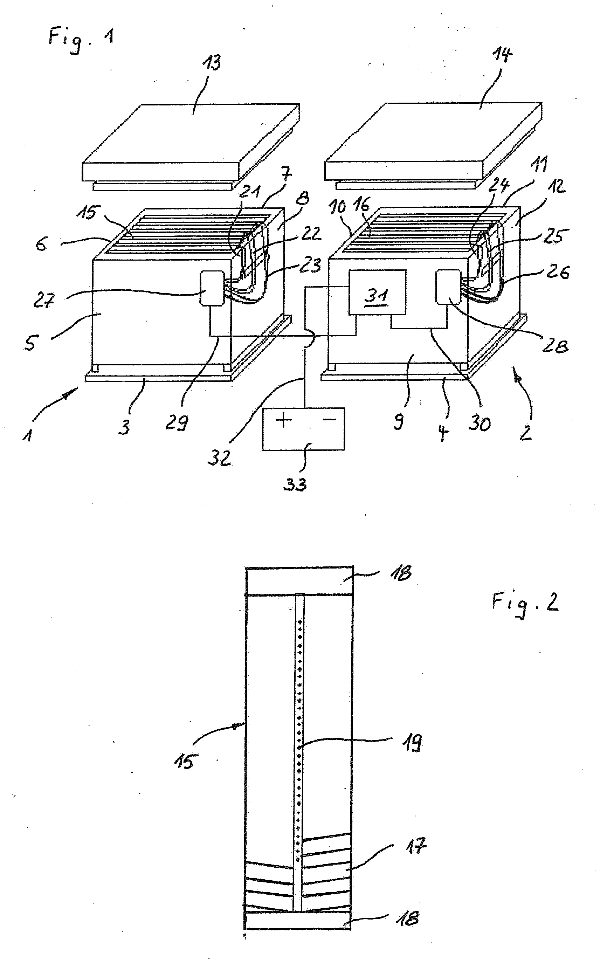

In Figur 1 sind nebeneinander zwei im Wesentlichen würfelförmige Bienenkästen 1, 2 dargestellt. Sie haben jeweils eine Bodenwandung 3 bzw. 4 und vier im rechten Winkel zueinander angeordnete Seitenwandungen 5, 6, 7, 8 bzw. 9, 10, 11, 12. Zu den Bienenkästen 1, 2 gehört jeweils eine abnehmbare Deckenwandung 13 bzw. 14, die hier im vertikal abgehobenen Zustand dargestellt sind.

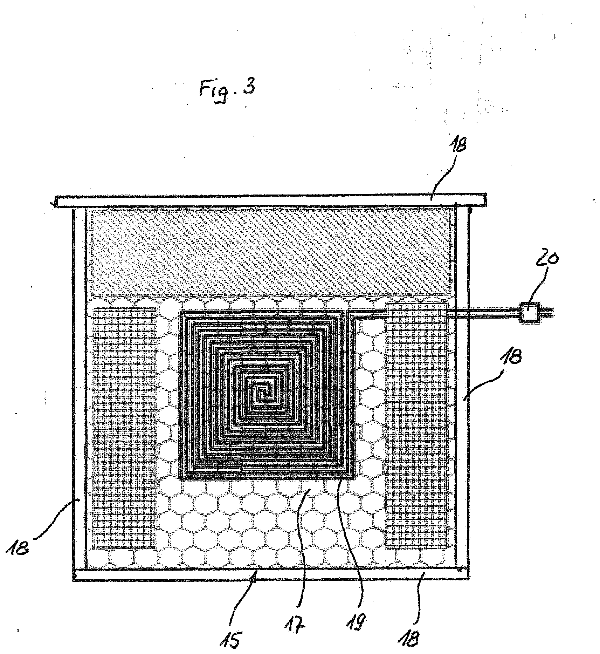

In die Bienenkästen 1, 2 eingehängt sind jeweils eine Mehrzahl von Mittelwänden - beispielhaft mit 15 bzw. 16 bezeichnet -, die sich vertikal und parallel zu den Seitenwandungen 5, 7 bzw. 9, 11 erstrecken. Ein Teil der Mittelwände 15, 16 sind so ausgebildet, wie in den Figuren 2 und 3 dargestellt.

Die in den Figuren 2 und 3 gezeigte Mittelwand 15 besteht aus Wachs und ist beidseits mit ebenfalls aus Wachs geformten, sechseckigen Brutzellen - beispielhaft mit 17 bezeichnet - versehen, die größenmäßig als Brutzellen 17 für weibliche Bienen gestaltet sind und von denen in Figur 2 nur ein Teil gezeichnet sind. Umgeben ist die Mittelwand 15 - wie alle anderen Mittelwände 15, 16 - von einem Rähmchen 18, über das die Mittelwand 15 in einem der Brutkästen 1, 2 eingehängt werden kann, so dass sie senkrecht nach unten hängt.

In die Mittelwand 15 eingelassen ist ein Widerstandsheizelement in Form einer rechteckigen Heizspirale 19 aus Kaltleitermaterial. Ihre Formgebung und Erstreckung ergibt sich insbesondere aus Figur 3. Die Heizspirale 19 wird aus der Mittelwand 15 herausgeführt und endet in einem Stecker 20. Die Heizspirale 19 erstreckt sich nur im Mittenbereich der Mittelwand 15. Der obere schraffierte Bereich, auch Futtergürtel genannt, sowie die kariert gezeichneten Seitenbereiche, die für die Einlagerung von Pollen bestimmt sind, und ein unterer Bereich, sind frei gelassen.

In dem Beispiel gemäß Figur 1 sind jeweils drei der Mittelwände 15, 16 so ausgebildet, wie in den Figuren 2 und 3 dargestellt, d.h. diese Mittelwände 15, 16 sind in identischer Weise mit Heizspiralen 19 versehen. Über Leitungen 21, 22, 23 bzw. 24, 25, 26 sind die betreffenden Mittelwände 15, 16 jeweils an eine dem Bienenkasten 1 bzw. 2 zugeordneten Volksteuerung 27 bzw. 28 angeschlossen. Die Volksteuerungen 27, 28 sind über Leitungen 29, 30 mit einer Bienenstandsteuerung 31 gekoppelt. Diese hat über eine weitere Leitung 32 Verbindung zu einer Stromquelle 33, die beispielsweise Netzstrom liefert oder als Batterie oder Solarzelle ausgebildet ist.

Die Bienenstandsteuerung 31 hat eine integrierte Schaltung, die über eine Software gesteuert wird. In erster Linie ermöglicht die Bienenstandsteuerung 31, einen Heizvorgang für eine angeschlossene Mittelwand 15, 16 zu steuern bzw. zu regeln. Über die Leitungen 29, 30 erhalten dann die Volksteuerungen 27, 28 eine für den Heizvorgang bestimmte Stromzufuhr. Die Volksteuerungen 27, 28 dienen vornehmlich dazu, jeweils eine der angeschlossenen Mittelwände 15, 16 zuzuschalten, d.h. die Volksteuerungen 27, 28 sorgen dafür, dass nur jeweils eine der angeschlossenen Mittelwände 15, 16 mit von der Basissteuerung 31 kommenden elektrischen Strom versorgt werden. Im Einzelnen geschieht das wie folgt.

Die Heizvorgänge werden nach Einhängen der Mittelwände 15, 16 in die Bienenkästen 1, 2 durchgeführt, wenn die Mittelwände 15, 16 zu Brutwaben ausgebaut sind und mit Bienenbrut belegt sind. In der nachstehenden Beschreibung werden die Brutwaben gleichwohl noch als Mittelwände 15, 16 bezeichnet.

Die Heizvorgänge für die angeschlossenen, zu Brutwaben ausgebauten Mittelwände 15, 16 werden vom Imker durch Eingabe des Datums und der Uhrzeit über entsprechende Funktionstasten an der Bienenstandsteuerung 31 initiiert. Es erfolgt ein Testlauf in Bezug auf alle Verbindungen und Anzeige der Anzahl der Bienenkästen 1, 2 und der angeschlossenen Mittelwände 15, 16. Meldet das System einen Fehler, wird der Test nach Beheben des angezeigten Fehlers erneut durchgeführt. Wird die Fehlermeldung ignoriert, startet das System nach einer bestimmten Zeit automatisch, vermeidet aber die Behandlung in demjenigen Bienenkasten 1, 2, wo ein Fehler aufgetreten ist.

Meldet das System in der Bienenstandsteuerung 31 eine ordnungsgemäße Funktion, wird automatisch ein Heizvorgang gestartet. Dabei wird zunächst in dem ersten Bienenkasten 1 eine erste Mittelwand 15, d.h. deren Heizspirale 19, mit elektrischem Strom versorgt. Da die Heizspirale 19 als Kaltleiter ausgebildet ist, erhöht sich deren Widerstand mit zunehmender Temperatur. Durch Messung des jeweiligen Stroms und der jeweiligen Spannung in Abständen von 1 Minute und jeweils durch Vergleich mit einem gespeicherten Wert in Abhängigkeit von der jeweils abgelaufenen Zeit wird die Stromzufuhr durch repetitives Ein- und Ausschalten gesteuert. Wird dabei ein Maximalwert für den Strom und die Spannung überschritten, wird die Stromzufuhr unterbrochen. Wird der Maximalwert nicht überschritten, erfolgt ein Ausschalten des Stroms nach einer jeweils vorprogrammierten Zeit. Das Einschalten der Stromzufuhr erfolgt dann wieder nach einer bestimmten Zeit, und die Messung von Strom und Spannung wird erneut vorgenommen. Durch den repetitiven Vergleich mit vorgegebenen Werten wird die Aufheizphase entsprechend einem gewünschten Verlauf, vorzugsweise einem linearen, d.h. gleichmäßigen Verlauf, gesteuert. In der anschließenden Haltephase nach Erreichen der Maximaltemperatur dient die vorbeschriebene Steuerung dazu, die Temperatur möglichst konstant auf einen Wert von etwa 42°C am Boden der Brutzellen 17 im Bereich der Heizspirale 19 zu halten.

In dem Ausführungsbeispiel erstreckt sich die Aufheizphase über etwa 1 Stunde und die Haltephase über etwa 2 Stunden, so dass der Heizvorgang für eine Mittelwand 15, 16 insgesamt 3 Stunden dauert. Nach Beendigung der Haltephase wird im Zusammenspiel mit der Volksteuerung 27 die gerade behandelte Mittelwand 15 von der Stromzufuhr abgetrennt, und es wird die vorzugsweise benachbarte Mittelwand 15 zugeschaltet. Es erfolgt dann der gleiche Heizvorgang für diese Mittelwand 15, und sofort. Sind alle angeschlossenen Mittelwände 15 im Bienenkasten 1 thermisch behandelt, schaltet die Bienenstandsteuerung 31 zu der Volksteuerung 28 des zweiten Bienenkastens 2, und es werden dort nacheinander die dort angeschlossenen Mittelwände 16 in der vorbeschriebenen Weise thermisch behandelt, und zwar nacheinander und unmittelbar aufeinanderfolgend. Sind weitere Bienenkästen vorhanden, erfolgt eine entsprechende sukzessive Behandlung der dort angeschlossenen Mittelwände.

Ist die Behandlung der Mittelwände 15, 16 in den Bienenkästen 1, 2 abgeschlossen, beginnt der vorbeschriebene Prozess von vorne, sofern nicht in die Bienenstandsteuerung 31 eine Intervallzeit eingegeben wird, in der die thermische Behandlung der angeschlossenen Mittelwände 15, 16 unterbrochen wird. In der Brutzeit kann diese Intervallzeit mehrere Wochen betragen. Die Repetivität kann der Imker aufgrund seiner Beobachtungen über den Varroabefall anpassen.

Die Bienenstandsteuerung 31 ist nicht nur dazu ausgerüstet, die einzelnen Heizvorgänge für die Mittelwandungen 15, 16 zu steuern, sondern weist auch noch weitere Funktionen auf. So wird eine Dokumentation der einzelnen Heizvorgänge nach Datum, Uhrzeit, zugehörigem Bienenkasten 1, 2 und angeschlossener Mittelwand 15, 16 vorgenommen. Die Bienenstandsteuerung 31 hat ein Display, über das abgelesen werden kann, welche einzelne Mittelwand 15, 16 gerade thermisch behandelt wird. Es sind Notfunktionen integriert, die bei ungenügender Stromversorgung, Kurzschlüssen oder dergleichen Alarm geben und dies auch protokollieren. Stützbatterien sorgen dafür, dass der Prozessor der Basissteuerung 31 die Daten auch bei Stromausfall sichert. Über eine SD-Karte können die Protokolle ausgelesen werden, und es besteht auch die Möglichkeit, darüber abweichende Abläufe für die Heizvorgänge einzugeben. Ferner ist ein Stand-By-Modus vorgesehen, der es ermöglicht, während einer Heizphase an den Bienenvölkern zu arbeiten. Dabei wird automatisch nach einer bestimmten, einstellbaren Zeit wieder auf den Normalbetrieb umgeschaltet.

## Patentansprüche

1. Vorrichtung zur Bekämpfung der Varroamilbe in einer Bienenbrut, mit zumindest einer insbesondere in einen Bienenkasten (1, 2) einsetzbaren Mittelwand (15, 16), die mit vorgeprägten Brutzellen (17) für weibliche Bienen versehen ist, wobei die Vorrichtung eine elektrische Heizeinrichtung aufweist, die ein in die Mittelwand (15, 16) eingelassenes Widerstandsheizelement (19) und eine damit verbundene Steuereinrichtung (27, 28, 31) aufweist, die derart ausgebildet ist, dass ein automatisch ablaufender Heizvorgang mit einer zeitlich vorbestimmten Aufheizphase bis zum Erreichen einer Temperatur von 39°C bis 45°C, vorzugsweise 39°C bis 42°C, am Boden der Brutzellen (17) im Bereich des Widerstandsheizelements (19) und dann mit einer sich daran anschließenden Haltephase auf dieser Temperatur über eine vorbestimmte Zeit initiierbar ist.

2. Vorrichtung nach Anspruch 1, **dadurch gekennzeichnet, dass** die Steuereinrichtung (27, 28, 31) derart ausgebildet ist, dass sich die Aufheizphase über mindestens 30 Minuten, insbesondere über mindestens 1 Stunde erstreckt, und/oder dass die Temperatur in der Aufheizphase gleichmäßig erhöht wird.

3. Vorrichtung nach 1 oder 2, **dadurch gekennzeichnet, dass** die Steuereinrichtung (27, 28, 31) derart ausgebildet ist, dass sich die Haltephase über mindestens 30 Minuten, insbesondere über mindestens 1 Stunde, vorzugsweise mindestens 1,5 Stunden, insbesondere 2 Stunden erstreckt.

4. Vorrichtung nach einem der Ansprüche 1 bis 3, **dadurch gekennzeichnet, dass** die Steuereinrichtung (27, 28, 31) derart ausgebildet ist, dass nach Initiierung eines ersten Heizvorgangs automatisch zumindest ein weiterer Heizvorgang, insbesondere in vorbestimmten oder einstellbaren zeitlichen Abstände bewirkt wird.

5. Vorrichtung nach einem der Ansprüche 1 bis 4, **dadurch gekennzeichnet, dass** das Widerstandsheizelement (19) als Kaltleiter ausgebildet ist und die Steuereinrichtung (27, 28, 31) derart ausgestaltet ist, dass die Steuerung der Temperatur in der Aufheizphase und in der Haltephase durch Anpassung der jeweils gemessenen Werte für Strom und Spannung im Kaltleiter an in der Steuereinrichtung (27, 28, 31) hinterlegte Werte erfolgt.

6. Vorrichtung nach einem der Ansprüche 1 bis 5, **dadurch gekennzeichnet, dass** die Vorrichtung mehrere Mittelwände (15, 16) mit darin eingelagerten Widerstandselementen (19) aufweist, die mit der Steuereinrichtung (27, 28, 31) verbunden sind und über die jeweils ein Heizvorgang in jedem der Mittelwände (15, 16) initiierbar ist.

7. Vorrichtung nach Anspruch 6, **dadurch gekennzeichnet, dass** die Mittelwände (15, 16) Gruppen von jeweils mehreren Mittelwänden (15, 16) bilden, wobei jede Gruppe für den Einsatz in jeweils einem Bienenkasten (1, 2) bestimmt ist.

8. Vorrichtung nach Anspruch 6 oder 7, **dadurch gekennzeichnet, dass** die Steuereinrichtung (27, 28, 31) derart ausgebildet ist, dass die Heizvorgänge für die Mittelwände (15, 16) nacheinander, vorzugsweise unmittelbar aneinander anschließend, durchführbar sind.

9. Vorrichtung nach einem der Ansprüche 6 bis 8, **dadurch gekennzeichnet, dass** die Steuereinrichtung (27, 28, 31) derart ausgebildet ist, dass die Heizvorgänge für sämtliche Mittelwänden (15, 16) in vorbestimmten oder einstellbar vorbestimmbaren zeitlichen Abständen bewirkbar sind.

10. Vorrichtung nach einem der Ansprüche 1 bis 9, **dadurch gekennzeichnet, dass** die Steuereinrichtung (27, 28, 31) derart ausgebildet ist, dass Datum und Uhrzeit jedes Heizvorgangs für jede Mittelwand gespeichert werden.

## Claims

1. Device for combating the varroa mite in a bee brood, comprising at least one middle wall (15, 16) that can be inserted in particular into a beehive (1, 2) and that is provided with brood cells (17) for female bees, wherein the device has an electrical heating device that has a resistance heating element (19) embedded in the middle wall (15, 16) and a control device (27, 28, 31) connected to the latter which is designed such that an automatically running heating process can be initiated with a temporally pre-determined heat-up phase that lasts until a temperature of 39°C to 45°C, preferably 39°C to 42° C, is reached at the bottom of the brood cells (17) in the region of the resistance heating element (19) and then with a subsequent phase of maintaining this temperature for a predetermined period of time.

2. Device according to claim 1, **characterized in that** the control device is formed such that the heat-up phase lasts for at least 30 minutes, in particular at least 1 hour, and/or that the temperature is increased evenly in the heat-up phase.

3. Device according to claim 1 or 2, **characterized in that** the control device is formed such that the maintenance phase lasts for at least 30 minutes, in particular at least 1 hour, preferably at least 1.5 hours, in particular 2 hours.

4. Device according to any of claims 1 to 3, **characterized in that** the control device (27, 28, 31) is designed such that after the initiation of a first heating process at least one additional heating process is automatically brought about, in particular at predetermined or settable intervals of time.

5. Device according to any of claims 1 to 4, **characterized in that** the resistance heating element (19) is in the form of a PTC resistor and the control device (27, 28, 31) is configured such that the temperature in the heat-up phase and in the maintenance phase is controlled by adapting the respectively measured values for current and voltage in the PTC resistor to values stored in the control device (27, 28, 31).

6. Device according to any of claims 1 to 5, **characterized in that** the device has a number of middle walls (15, 16) with resistance heating elements (19) embedded in the latter and which are connected to the control device (27, 28, 31) and by means of which a heating process can respectively be initiated in each of the middle walls (15, 16).

7. Device according to claim 6, **characterized in that** the middle walls (15, 16) form groups each comprising a number of middle walls (15, 16), each group being intended for use in a respective beehive (1, 2).

8. Device according to claim 6 or 7, **characterized in that** the control device (27, 28, 31) is designed such that the heating processes for the middle walls (15, 16) can be carried out one after the other, preferably following on immediately from one another.

9. Device according to any of claims 6 to 8, **characterized in that** the control device (27, 28, 31) is designed such that the heating processes for all of the middle walls (15, 16) can be brought about at predetermined intervals of time or predeterminable intervals of time that can be set.

10. Device according to any of claims 1 to 9, **characterized in that** the control device (27, 28, 31) is designed such that the date and time of each heating process for each middle wall are stored.

## Revendications

1. Dispositif de lutte contre l'acarien varroa dans un couvain d'abeilles, comprenant au moins une paroi centrale (15, 16) qui peut être insérée en particulier dans une boîte à abeilles (1, 2) et qui est munie de cellules à couvain (17) pré-estampées pour abeilles femelles, le dispositif comprenant un dispositif électrique de chauffage qui comporte un élément chauffant par résistance (19) intégré dans la paroi centrale (15, 16) et un dispositif de commande (27, 28, 31) connecté à celui-ci, qui est conçu de telle sorte qu'un processus de chauffage automatique peut être déclenché pendant une période de temps prédéterminée au fond des cellules à couvain (17) dans la zone de l'élément chauffant à résistance (19) jusqu'à ce qu'une température de 39°C à 45°C, de préférence de 39°C à 42°C, soit atteinte, puis avec une phase de maintien à cette température pour une période prédéterminée.

2. Dispositif selon la revendication 1, **caractérisé en ce que** le dispositif de commande est conçu de telle sorte que la phase de chauffage s'étend sur au moins 30 minutes, en particulier sur au moins 1 heure, et/ou **en ce que** la température est augmentée uniformément pendant la phase de chauffage.

3. Dispositif selon la revendication 1 ou 2, **caractérisé en ce que** le dispositif de commande est conçu de telle sorte que la phase de maintien s'étend sur au moins 30 minutes, en particulier sur au moins 1 heure, de préférence au moins 1,5 heure, en particulier 2 heures.

4. Dispositif selon l'une des revendications 1 à 3, **caractérisé en ce que** le dispositif de commande (27, 28, 31) est conçu de telle sorte que, après le déclenchement d'un premier processus de chauffage, au moins un autre processus de chauffage est automatiquement effectué, en particulier à des intervalles de temps prédéterminés ou réglables.

5. Dispositif selon l'une des revendications 1 à 4, **caractérisé en ce que** l'élément chauffant à résistance (19) est réalisé sous la forme d'une thermistance CTP et le dispositif de commande (27, 28, 31) est réalisé de telle sorte que la température est réglée pendant la phase de chauffage et pendant la phase de maintien par adaptation des valeurs mesurées respectivement en courant et en tension de la thermistance CTP aux valeurs enregistrées dans le dispositif de commande (27, 28, 31).

6. Dispositif selon l'une des revendications 1 à 5, **caractérisé en ce que** le dispositif présente une pluralité de parois centrales (15, 16) dans lesquelles sont noyés des éléments de résistance (19) qui sont reliés au dispositif de commande (27, 28, 31) et par lesquels un processus de chauffage peut être déclenché dans chacune des parois centrales (15, 16).

7. Dispositif selon la revendication 6, **caractérisé en ce que** les parois centrales (15, 16) forment des groupes de respectivement plusieurs parois centrales (15, 16), chaque groupe étant destiné à être utilisé dans une boîte à abeilles (1, 2) respective.

8. Dispositif selon la revendication 6 ou 7, **caractérisé en ce que** le dispositif de commande (27, 28, 31) est conçu de telle sorte que les processus de chauffage des parois centrales (15, 16) puissent être effectués successivement, de préférence directement adjacents les uns aux autres.

9. Dispositif selon l'une des revendications 6 à 8, **caractérisé en ce que** le dispositif de commande (27, 28, 31) est conçu de telle sorte que les processus de chauffage pour toutes les parois centrales (15, 16) puissent être effectués à des intervalles de temps prédéterminés ou réglables prédéterminés.

10. Dispositif selon l'une des revendications 1 à 9, **caractérisé en ce que** le dispositif de commande (27, 28, 31) est conçu de telle sorte que la date et l'heure de chaque opération de chauffage sont enregistrées pour chaque paroi centrale.
